# EUROPEAN PATENT SPECIFICATION

(11) **EP 2 801 247 B1**
(45) Date of publication and mention of the grant of the patent: **14.12.2016**
(21) Application number: 12875715.0
(22) Date of filing: 28.09.2012
(51) Int. Cl.: A01C 15/02, A01M 7/00, B05B 1/30, B05B 7/14, A01M 9/00

(54) **PORTABLE DEVICE FOR APPLICATION OF GRANULATED PARTICLES**
TRAGBARE VORRICHTUNG ZUM AUFBRINGEN VON GRANULATARTIKELN
SYSTÈME PORTATIF D'APPLICATION DE PARTICULES GRANULAIRES

(43) Date of publication of application: 12.11.2014
(73) Proprietor: Guarany Ind. Com. Ltda, Itu - SP 13308-200 (BR)
(72) Inventor: FLEURY BELLANDI, Carlos Alberto, Itu - São Paulo (BR)
(74) Representative: Zimmermann, Tankred Klaus
(86) International application number: PCT/BR2012/000402
(87) International publication number: WO 2014/047699

(56) References cited:
- EP-A1- 1 886 613
- WO-A1-94/10082
- BR-U2- MU9 000 399
- DE-U1-202009 006 000
- GB-A- 883 371
- US-A- 4 407 434
- US-A- 5 944 231
- US-A- 5 944 231
- US-A1- 2007 113 762

## Description

### APPLICATION FIELD

The present patent application refers to a portable system for application and preferential dosage of fertilizers and pesticides comprising a joystick-type portable command for applying granulate particles by gravity flow, for applications located on the ground surface, plant pots, etc.; and for continuous applications (for example, grams per minute) inside the planting furrows or even in coverage of the total area. Manufactured for assembly with a discharge pipe, to be connected together to the bottom of a storage tank of granules, usually carried at the back of a user, for use by rural producers/creators in various applications, even in large areas, where, for example, an irregular topography of the ground prevent the access of tractor-implemented systems.

### BACKGROUND OF THE INVENTION

At the agricultural industry the correct application of granular fertilizers should be performed based on a previous foliar and/or soil analysis so as to calculate dosages of application; in case of application of pesticides, it should follow the dosages recommended on the chemical label, which in general will vary according to the crop, biological target (pest, weed, disease), stage of development of crop or even of the target. Thus, it is clear that there can be numerous possibilities of dosages in the agricultural industry, and is of great importance to perform applications accurately and in the proper place, in order to guarantee the proper growth and protection of crops and consequently the economic viability of the work.

Accordingly, an irregular dosage resulting in the application of under-dosing or overdosing, respectively, causes that some areas receive greater or lesser amount of fertilizer than necessary, creating nutritional deficiencies to the plantation or problems of phytotoxicity

It should be noted that, these days, where environmental problems have worsened, it is of prime importance the rational use of fertilizers and pesticides. Proper dosage avoids problems of soil salinization and eutrophication of the water bodies in excess by fertilizers commonly used and also reduces contamination of the water, soil and food.

### STATE OF THE ART DESCRIPTION

Traditionally, a rudimentary form of application of materials in the form of granules in the scope of the manual equipment consists of steps where the user carries a bag or other container containing the granules and distributes them through simple cups of known volume. In this method, the main disadvantage is the great imprecision in rate and direction of application.

Another method further comprises the use of equipments carried manually. These consist of small containers for granules coupled to a dosage regulator system. These types of devices are disclosed in the patent applications MU8502426-0, PI0004649-3 and PI9401698-4.

The document MU8502426-0 discloses a manual manure spreader, consisting of a device having a penetration nozzle, with an opening at its end which is actuated by a door handle in connection with the tie rod and an adjustment mechanism of the released manure amount.

The document PI0004649-3 discloses an equipment for manure application, comprising a storage coupled to a distribution cone, being this controlled by a return spring mechanism and threaded bar.

The document PI9401698-4 discloses a manual manure spreader, provided of two reservoirs that communicate to each other through an internal valve, and an outlet valve; both valves present coordinated operation through rods, handled by the operator.

A disadvantage from the devices disclosed in the documents described comes from the fact that they present low accuracy regarding the dosage; the quantity of fertilizer product or agrochemical released is determined by the operator's skill, making it subject to deviations in the proper dosage; in addition, in the case of equipment from the document PI9401698-4, there is no option to vary the application dosage.

Another method further comprises the use of equipments that present a tank (rigid or flexible) to store the (front) or shoulder of the user, using one or two supporting belts (carrying straps). In these equipments, the discharge/release system is constituted by a hose/duct coupled to the storage tank bottom of the product, where the granules flow by gravity. Some examples illustrating this type of project conception are disclosed in the documents MU9000399-3, US5339994 (in these, the dispenser system is positioned in the discharge mean region) and, in the documents EP1763985 and PI9902979 (in which the dispenser system is positioned in the product discharge end). Another constructive range refers to dispenser systems positioned in the tank/storage bottom, such as it is exemplified in the patent US4545513. It should be noted that this last concretion, presents disadvantages, like an increased probability of clogging of the dispenser system by compacting the granules in the tank and the difficulty of maintaining the system, being necessary to empty the tank.

Although some documents cited above are characterized by providing accuracy in the dosage application (MU9000399-3 PI9902979 and EP1763985), they commercially limit the use of the systems to a few options of granular products, the case of MU9000399-3 and PI9902979, or show a range of dosages limited to small masses (grams), case of EP1763985 and PI9902979 due to limitations of the chamber of the dispenser system.

Also regarding to the state of the art, there are systems with greater simplicity that do not have a proper dosage control per se, because they have no adjustments delimiting the mass or volume of the product to be applied; in these systems, the dosage "control" is based only in the presence of a valve actuation, which opens and closes in the way of the product to the equipment output (usually located close to this output). Therefore, in these equipments the dosage is entirely dependent on the time of actuation of opening and closing actions of the valve by the user and cannot be considered as accurate dispenser systems, since they do not allow to accurately repeat the steps, which are totally dependent on the user skill.

In this sense, and from the foregoing, it is clear that the dispensing devices in the current state of the art either operate within a narrow range of variations or do not guarantee proper control, restricting in the recommendation of its technical/commercial brochures to the use of certain granules (for example, a fertilizer in the NPK formulation), since in practice, other granules do not ensure the correct dosage or may cause damage to the system.

Additionally, none of the systems described allows changing an application of accurate dosages predetermined (grams per actuation) for a continuous application of the product (grams per time) without the need for inclusion, removal or exchange of parts in their system. Therefore such equipments are not suitable to meet the necessities of the agricultural or other industries that require the accurate application of granulated products, given that the aforementioned adjustments restrictions, low capacity dosages, products specificity that apply and/or inaccuracies inherent to the system.

DE 20 2009 006 000 U1 discloses a spraying device for garden or agriculture applications which makes use of an electric pump.

WO 94/10082 discloses a fertilizer assembly with a dispensing gun.

EP 1 886 613 A1 discloses a portable spraying device.

US 5,944,231 discloses a fertilized dispensing assembly.

### OBJECT OF THE INVENTION

In this sense, considering the context of the limitations of the current state of the art, the present invention aims to overcome its disadvantages disclosing a dual function system for applying various granules - dosed and continuous application - by proposing a portable system according to claim 1.

### BRIEF DESCRIPTION OF THE DRAWINGS

Fig. 1 illustrates a front view of the proposed system.
Fig. 2 illustrates a perspective view of the proposed system.
Fig. 3 illustrates a perspective view of the manual command.
Fig. 4 illustrates a perspective view in cross-section of the manual command.
Fig. 5 illustrates a side view of the manual command, in that the actuation handle and the slide valve are closed and opened respectively.
Fig. 6 illustrates a side view of the manual command, in that the actuation handle and the slide valve are both closed.
Fig. 7 illustrates a side view of the manual command, in that the actuation handle is opened and the slide valve is closed.
Fig. 8 illustrates a side view of the dosage manual command adjusted for minimum adjustment.
Fig. 9 illustrates a side view of the dosage manual command adjusted for maximum adjustment.
Fig. 10 illustrates a side view of the dosage manual command having the slide valve blocked to activate the continuous application adjustment in the position 1 (smaller flow rate).
Fig. 11 illustrates a side view of the dosage manual command having the command 'joystick' actuated for operation in continuous application.

### DETAILED DESCRIPTION OF DRAWINGS

The invention is defined in claim 1.

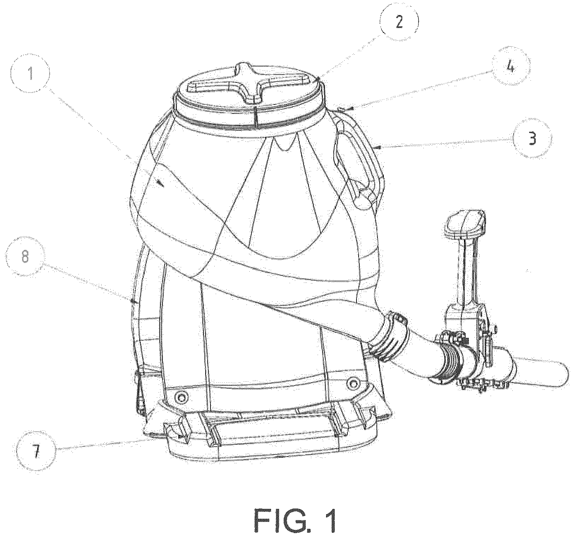

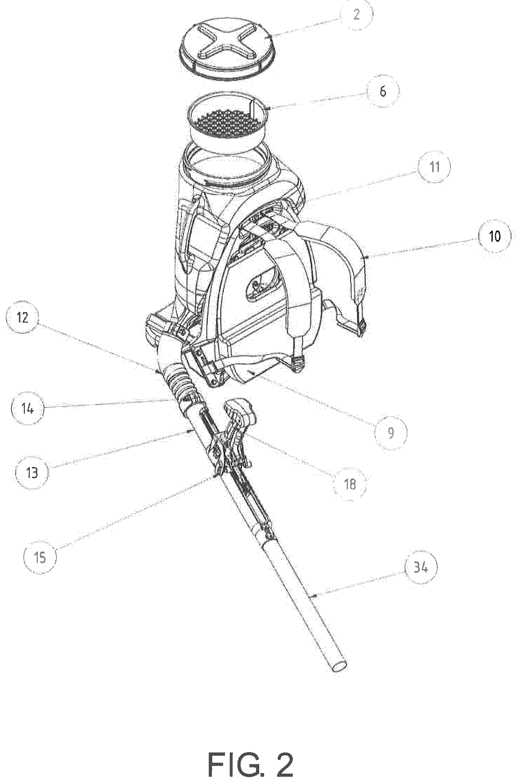

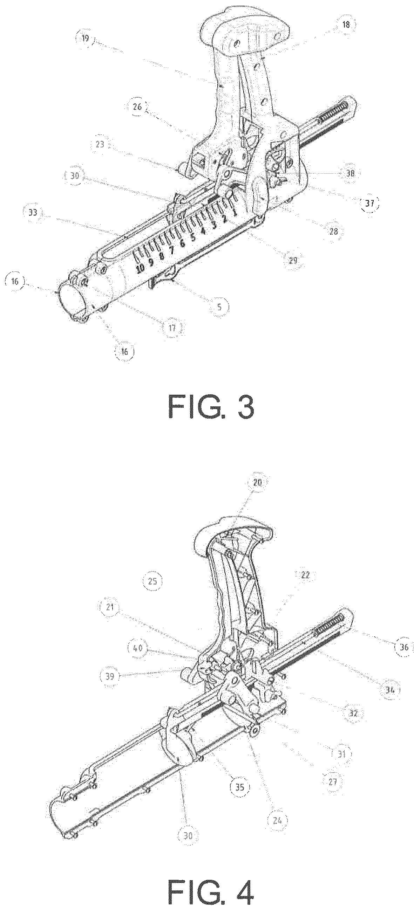

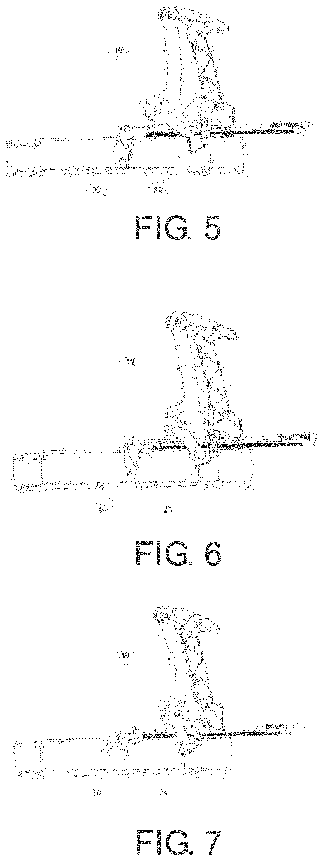

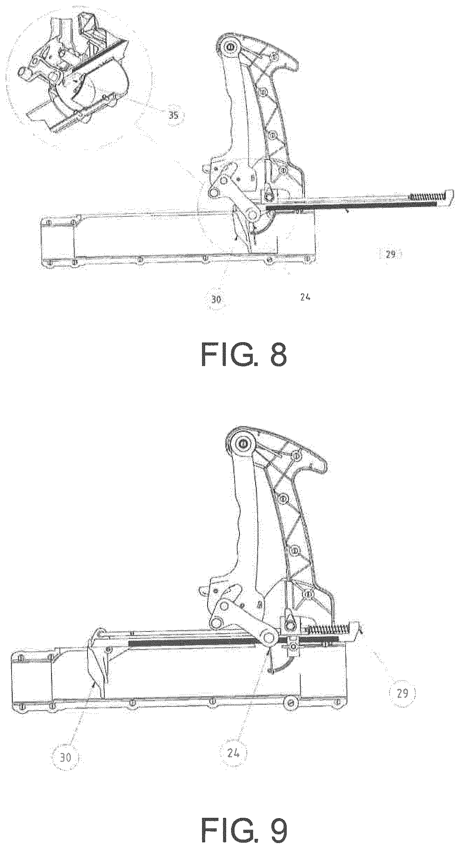

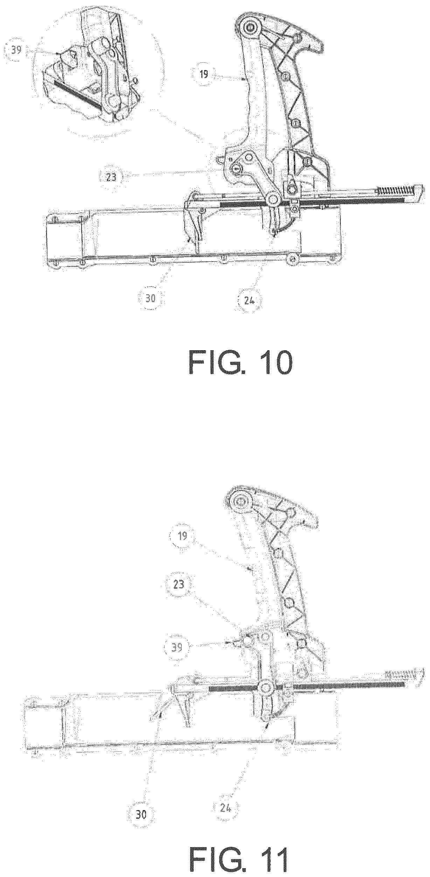

According to Figs. 1 to 11, the application system comprises a reservoir (1), molded in plastic with geometry duly adjusted to any granulate to be applied, great dimensions nozzle and lid (2) to facilitate the supply, carrying handle embedded (3), protrusion (4) for fixing the discharge rest belt (5) and sieve (6) to prevent the entrance of granulate agglomerates which cannot be dosed properly due to its nonstandard size; tapering in the lower part to improve granular flow by gravity action until it is empty, avoiding accumulation of product residue at the bottom

The reservoir is attached to a component molded in plastic composed of a base (7) with big support, to be fixed to the reservoir (1) by means of a vertical fixing structure (8). Attached to this structure one padded and ergonomic lumbar protection (9) and padded support belt (carrying strap) (10) with adjustable height attachment (11) providing a correct accommodation of the set in the operator's back.

A flexible hose (12) and a discharge pipe (13) are coupled to this reservoir through the hose clamp (14), to facilitate the movement and allow the operator to direct the product to be applied to the target. Hose clamp (14) allows the distance adjustment of the handle/knob (18) manually without the need to switch to obtain a better ergonomics during the application.

The main component of the equipment is the manual command of double function or dispenser command (15) that is attached to the discharge pipe (13), being composed of a body (16) consisting of two halves joined by screws (17), which has the function of a handle/'joystick' (18), designed to adjust to the operator's hand and a protrusion in the upper end, to improve the ergonomics and the set weight distribution An actuation lever (19) is coupled to this body (16) together with a torsion spring (20) causing the lever (19) to return to its original position after the actuation. In the lower part of the lever there is attached an arm (21) through a pin (22) and a spring (25) keeping it pressed in the movement rip lower end (26). Coupled to this arm (21) two joints (levers) (23) move a slide valve (24), which slides over guides (28) present in the body closing and opening when the lever (19) is actuated. The slide valve (24) is guided by bushing (31) at one end and by a shaft (27) at the other.

In the opening (33) present in the upper part of the body in the tubular region, a ruler (29) is slid having in its end an outlet valve (30). The dosage chamber is defined by the tube area and the space between the slide valve (24) and the outlet valve (30).

A metallic rod (34) is coupled to the outlet valve (30) in one end and therein it is attached the outlet valve regulator (32) and a biasing spring (36) to keep the valve closed.

For smaller adjustments, a protrusion in ramp (35), present in the ruler, limits the slide valve opening (24), which in combination with the opening and closing timing of the outlet valve (30) results in greater accuracy and dosages repeatability.

### System operation

In the dynamics of use when the reservoir (1) is filled with granule, it is conducted to the dispenser command (15) by gravity action. When the actuation lever (19) is loose the slide valve (24) is open and outlet valve (30) closed allowing the granules fill the dosing chamber. When the operator actuates the lever (19), it first closes the valve slide (24) and then opens the outlet valve (30) releasing granulate dosed for the discharge extension (34) which leads to the target.

The size of the dosing chamber can be changed releasing the screw (37) of the ruler latch (38) and of the outlet valve regulator (32), then sliding the ruler (29) to a position (enumeration) recorded in the body according to the desired volume, lock the ruler, take the outlet valve regulator (32) ahead and lock the same. This ruler keeps the dosing chamber closed independently of the adjustment/position. The device is developed to be versatile allowing changing the dosages linearly, covering wide volumetric range, not needing to change the components to change the dosages and enabling the use of several types of granules. The valves geometry (24 and 30) is projected to improve the development eliminating the gripping and reducing the actuation effort. Sporadically if the presence of agglomerated granules under the slide valve (24) prevent its complete closure, the arm (21) will move overcoming the spring load (25) allowing thereby, that the lever (19) is completely operated up to the outlet valve opening (30), emptying the dosing chamber without complete closure of the slide valve (24), so that it is not necessary to lock the system and protecting the pieces from the overload; and also, allowing to "expel" the granules agglomerated in the subsequent loading of the chamber. If this agglomerate detaches during the discharge, automatically the slide valve (24) will close on the spring action (25) of the arm (21).

In the joints (levers) (23) two cams are projected that are used to move the arm (21); positioning them in one of the positions 1 or 2 compressing the spring of the arm (25), a latch (39) keeps them in this position pressed by the latch spring (40). In this position the slide valve (24) is kept open in two positions (1 or 2) and the actuation lever (19) releases only the outlet valve (30). This position is used for applications in that the continuous flow rate is necessary. This adjustment system also allows the flow rate change, due to two different positions, #1 (smaller opening) e #2 (greater opening) of the joints (levers) (23). In this case, granulate continuous flow (grams per minute) is previously regulated by the joints (levers) position (23) and the dosage uniformity (grams per meter of the applied area) must be controlled by the operator walking speed.

## Claims

1. "PORTABLE SYSTEM FOR APPLYING GRANULATE PARTICLES", comprising:
a reservoir (1), molded in plastic and supported in a base (7), by means of substantially vertical fixing structures (8), which project perpendicularly regarding the base (7) ;
said reservoir (1) comprises arranged over its lower end a lumbar protection (9), and a pair of padded carrying straps (1) arranged transversally regarding the base (7) and attached at the lower and upper end of the reservoir (1), the straps being equipped with a height adjustment element (11);
a lid (2) arranged at the upper region of the reservoir (1), which covers an inlet opening provided with a sieve (6) ;
a carrying handle (3) projecting from the lateral upper end of the reservoir (1), on which there is provided a protrusion (4) at its upper end for attachment of a discharge belt (5) for partially holding a discharge pipe (13);
a flexible hose (12) coupled to the reservoir (1) at one end and to the discharge pipe (13) at the opposite end through a hose clamp (14);
a dosing manual command (15), attached to the discharge pipe (13), comprising a body (16) constituted of two halves joined by screws (17), on which there is arranged a handle (18) and an actuation lever (19) connected to the handle (18) through a torsion spring (20);
the lower part of the actuation lever (19) being slidably connected to an arm, which is turn is pivotally connected to the base of the handle through a pin (22) and a spring (25) which biases the arm towards the lower end of a slit (26) which constitutes the sliding connection of the actuation lever (19);
coupled to this arm (21) there are provided two levers (23) which move a slide valve (24), which slides over guides (28) present in the body closing and opening the valve (24) when the actuation lever (19) is actuated;
the slide valve (24) being guided by bushing (31) at an end and by a shaft (27) at the other.

2. "SYSTEM" according to claim 1, wherein the body (16) presents an opening (33) provided at the upper part of a tubular region, through which a ruler (29) slides and at which end an outlet valve (30) is provided.

3. "SYSTEM" according to claim 2, wherein the outlet valve (30) presents in its end a metallic rod (34) being attached to which an outlet valve regulator (32) with a biasing spring (36) is attached.

4. "SYSTEM" according to claim 2 or 3, wherein a protrusion (35) is provided in the ruler (29) that limits the slide valve opening (24).

5. "SYSTEM" according to any of the preceding claims, configured so that the granulate particles flow to the dosing manual command (15) by gravity.

6. "SYSTEM" according to any of the preceding claims, wherein a dosage chamber is defined by the area of the tubular region times the distance between the slide valve (24) and the outlet valve (30).

## Patentansprüche

1. Tragbares System zum Aufbringen von Granulatpartikeln, das folgende Merkmale aufweist:
ein Reservoir (1), das aus Kunststoff geformt ist und in einer Basis (7) durch im Wesentlichen vertikale Fixierstrukturen (8) getragen wird, die bezüglich der Basis (7) senkrecht vorstehen;
wobei das Reservoir (1), angeordnet über sein unteres Ende, einen Lendenschutz (9) und ein Paar von gepolsterten Trageriemen (1) aufweist, die bezüglich der Basis (7) quer angeordnet sind und an dem oberen und unteren Ende des Reservoirs (1) befestigt sind, wobei die Riemen mit einem Höheneinstellelement (11) ausgestattet sind;
einen Deckel (2), der an der oberen Region des Reservoirs (1) angeordnet ist, der eine Einlassöffnung, die mit einem Sieb (6) versehen ist, abdeckt;
einen Tragegriff (3), der von dem seitlichen oberen Ende des Reservoirs (1) vorsteht, an dem ein Vorsprung (4) an seinem oberen Ende für eine Befestigung eines Abzugsbands (5) vorgesehen ist zum teilweisen Halten eines Auslassrohrs (13);
einen flexiblen Schlauch (12), der durch eine Schlauchklemme (14) an einem Ende mit dem Reservoir (1) und an dem gegenüberliegenden Ende mit dem Auslassrohr (13) gekoppelt ist;
eine manuelle Dosiersteuerung (15), die an dem Auslassrohr (13) angebracht ist, die einen Körper (16) aufweist, der aus zwei Hälften besteht, die durch Schrauben (17) verbunden sind, auf dem ein Griff (18) und ein Betätigungshebel (19), der durch eine Torsionsfeder (20) mit dem Griff (18) verbunden ist, angeordnet sind;
wobei das untere Teil des Betätigungshebels (19) gleitbar mit einem Arm verbunden ist, der wiederum schwenkbar mit der Basis des Griffs verbunden ist durch einen Stift (22) und eine Feder (25), die den Arm zu dem unteren Ende eines Schlitzes (26) vorspannt, der die Gleitverbindung des Betätigungshebels (19) bildet;
gekoppelt mit diesem Arm (21) sind zwei Hebel (23) vorgesehen, die ein Schieberventil (24) bewegen, das über Führungen (28) gleitet, die in dem Körper vorliegen, wodurch das Ventil (24) geschlossen und geöffnet wird, wenn der Betätigungshebel (19) betätigt wird;
wobei das Schieberventil (24) durch eine Buchse an einem Ende und durch eine Welle (27) an dem anderen geführt wird.

2. System gemäß Anspruch 1, bei dem der Körper (16) eine Öffnung (33) präsentiert, die an dem oberen Teil einer röhrenförmigen Region vorgesehen ist, durch die ein Regler (29) gleitet und an deren Ende ein Auslassventil (30) vorgesehen ist.

3. System gemäß Anspruch 2, bei dem das Auslassventil (30) an seinem Ende einen daran befestigten Metallstab (34) präsentiert, an dem ein Auslassventilregler (32) mit einer Vorspannungsfeder (36) befestigt ist.

4. System gemäß Anspruch 2 oder 3, bei dem in dem Regler (29) ein Vorsprung (35) vorgesehen ist, der die Schieberventilöffnung (24) begrenzt.

5. System gemäß einem der vorhergehenden Ansprüche, das ausgebildet ist, so dass die Granulatpartikel durch Schwerkraft zu der manuellen Dosiersteuerung (15) fließen.

6. System gemäß einem der vorhergehenden Ansprüche, bei dem eine Dosierkammer definiert ist durch den Bereich der röhrenförmigen Region mal dem Abstand zwischen dem Schieberventil (24) und dem Auslassventil (30).

## Revendications

1. Système portatif d'application de particules granulaires, comprenant:
un réservoir (1) moulé en matière plastique et supporté dans une base (7) au moyen de structures de fixation sensiblement verticales (8) qui font saillie perpendiculairement par rapport à la base (7);
ledit réservoir (1) comprend, disposés au-dessus de son extrémité inférieure, une protection lombaire (9) et une paire de sangles de transport rembourrées (1) disposées transversalement par rapport à la base (7) et fixées aux extrémités inférieure et supérieure du réservoir (1), les sangles étant munies d'un élément de réglage en hauteur (11);
un couvercle (2) disposé dans la région supérieure du réservoir (1), lequel recouvre une ouverture d'entrée munie d'un tamis (6);
une poignée de transport (3) ressortant de l'extrémité latérale supérieure du réservoir (1), sur laquelle est prévue une saillie (4) à son extrémité supérieure pour la fixation d'une courroie d'évacuation (5) destinée à retenir partiellement un tuyau d'évacuation (13);
un tuyau flexible (12) couplé au réservoir (1) à une extrémité et au tuyau d'évacuation (13) à l'extrémité opposée au moyen d'un collier de serrage de flexible (14);
une commande manuelle de dosage (15), fixée au tuyau d'évacuation (13), comprenant un corps (16) constitué de deux moitiés unies par des vis (17), sur laquelle est disposée une poignée (18) et un levier d'actionnement (19) connecté à la poignée (18) au moyen d'un ressort de torsion (20);
la partie inférieure du levier d'actionnement (19) étant connectée de manière coulissante à un bras qui est, à son tour, connecté de manière pivotante à la base de la poignée à l'aide d'une goupille (22) et d'un ressort (25) qui sollicite le bras vers l'extrémité inférieure d'une fente (26) qui constitue la connexion coulissante du levier d'actionnement (19);
couplés à ce bras (21) sont prévus deux leviers (23) qui déplacent une soupape à tiroir (24) qui coulisse sur des guides (28) présents dans le corps fermant et ouvrant la soupape (24) lorsque le levier d'actionnement (19) est actionné;
la soupape à tiroir (24) étant guidée par une douille (31) à une extrémité et par un arbre (27) à l'autre.

2. Système selon la revendication 1, dans lequel le corps (16) présente une ouverture (33) prévue dans la partie supérieure d'une région tubulaire à travers laquelle coulisse une règle (29) et à l'extrémité de laquelle est prévue une soupape de sortie (30).

3. Système selon la revendication 2, dans lequel la soupape de sortie (30) présente une tige métallique (34) fixée à son extrémité, à laquelle est fixé un régulateur de soupape de sortie (32) avec un ressort de rappel (36).

4. Système selon la revendication 2 ou 3, dans lequel une saillie (35) est prévue dans la règle (29) qui limite l'ouverture de la soupape à tiroir (24).

5. Système selon l'une quelconque des revendications précédentes, configuré de sorte que les particules granulaires circulent vers la commande manuelle de dosage (15) par gravité.

6. Système selon l'une quelconque des revendications précédentes, dans lequel une chambre de dosage est définie par la surface de la région tubulaire fois la distance entre la soupape à tiroir (24) et la soupape de sortie (30).
